# EUROPEAN PATENT SPECIFICATION

(11) **EP 1 940 929 B1**
(45) Date of publication and mention of the grant of the patent: **27.01.2010**
(21) Application number: 06793453.9
(22) Date of filing: 12.09.2006
(51) Int. Cl.: C08J 9/38, C08J 9/33, C08G 18/10, C08G 18/76

(54) **METHOD FOR PRODUCING A BONDED FOAM SUITABLE AS FLOOR UNDERLAY**
VERFAHREN ZUR HERSTELLUNG EINES ALS FUSSBODENUNTERLAGE GEEIGNETEN VERBUNDSCHAUMS
PROCEDE DE FABRICATION D'UNE MOUSSE LIEE ADAPTEE A DES APPLICATIONS EN TANT QUE SOUS-COUCHE DE SOL

(30) Priority: 12.09.2005 EP 05108337
(43) Date of publication of application: 09.07.2008
(73) Proprietor: Recticel, 1140 Brussel (Evere) (BE)
(72) Inventor: KAMPRATH, Axel, B-9230 Wetteren (BE); EHRENTREICH, Marcus, 87727 Babenhausen (DE)
(74) Representative: Van Reet, Joseph
(86) International application number: PCT/EP2006/066279
(87) International publication number: WO 2007/031517

(56) References cited:
- EP-A- 0 862 032
- WO-A-01/00718
- DE-C1- 4 313 781
- US-A1- 2003 170 420

## Description

The present invention relates to a method for producing a bonded foam comprising the steps of providing an amount of particles which comprise polyurethane foam particles; applying a binder onto said particles; compressing the particles having the binder applied thereon to such a degree that the bonded foam has a pressure deformation modulus (DVM: DruckVerformungsModul) greater than 0.015 N/mm², preferably greater than 0.020 N/mm²; and allowing the binder to set to bond the particles in their compressed state to one another. The invention also relates to the produced bonded foam and to the use thereof as underlay for a top floor layer, in particular for a rigid top floor layer.

Bonded foams are usually made of waste produced during the manufacture of trim foam. The foam waste is shredded or cut into foam particles which are compressed and bonded to one another by means of a binder. Due to the compression step, the resulting bonded foam has usually a higher density than the foam from which it is produced.

In a number of applications of bonded foam it is important for the bonded foam to have a sufficiently high pressure deformation modulus (DVM) and at the same time a low water uptake. Bonded foam plates are indeed often used as underlay for parquet or for other top floor layers. Especially when such underlay may come into contact with water, for example in kitchens or bathrooms or also when used in sport floors, a low water uptake is important in order to be able to maintain dry conditions preventing the growth of micro-organisms. In practice it has indeed been noticed that when using conventional open-celled bonded foams as floor underlay, the floors tend to smell after a while and growth of fungi and bacteria can almost never be avoided. This is due to the fact that those foams absorb a considerable amount of water and are almost impossible to dry without removing the top floor layers.

This problem of conventional open-celled bonded foam is disclosed for example on page 6 of the Infothek 2004 documentation of the company Polysport & Elaku Sportbaustoffe Gmbh (Germany) which is available on the webpage: http://www.polysport.de/infothek/- Infothek2004/pdf/Infothek2004.pdf, and wherein a closed-celled polyethylene foam provided with ridges is disclosed as an alternative for the open-celled bonded foam used as floor underlay.

A bonded foam which is on the contrary suitable for use under moist conditions is disclosed in WO 01/00718. During the production of this bonded foam a water-repellent additive is incorporated in the foam to reduce its water uptake. Moreover, a fungicide or a bactericide may be incorporated in the bonded foam to protect it against biological deteriorations. Although this method works rather well for high density bonded foams, in particular for bonded foams having a density higher than 250 kg/m³, it was found that for low density bonded foams, having in particular a density of between 60 and 120 kg/m³, the water uptake cannot be sufficiently reduced for some critical applications. Moreover, the high density water-repellent bonded foams do not allow drainage of water from the upper floor layers to the base layer. Consequently when the top floor layers have become wet for example due to spilling of water, the water-repellent bonded foam underlay does not help in the drying of these upper floor layers.

An object of the present invention is therefore to provide a new method resulting in a new type of bonded foam which also enables to achieve at lower densities a low water uptake and which has moreover better drying capabilities.

To this end, the method according to the invention is characterised in that said polyurethane foam particles comprise an amount of particles of at least one reticulated polyurethane foam which has an average cell size of at least 2 mm, and in that said amount of reticulated polyurethane foam particles and said degree of compression are selected in such a manner that the bonded foam has a water uptake, determined at 25°C in accordance with the French standard UEAtc H.1 MOD1, of maximum 250 g/m².

By the presence of the relatively coarse celled reticulated polyurethane foam particles in the bonded foam, the water uptake of the foam is reduced and the drying capabilities are improved. It has been found that notwithstanding the relatively large cell size of the reticulated foam particles, they can be compressed to such a degree that the obtained bonded foam has the hardness (DVM) required for floor underlay applications whilst the pores or open spaces in the bonded foam remain sufficiently large to ensure a low water uptake and good drying capabilities. To further reduce the water uptake, a water-repellent additive can also be incorporated in the bonded reticulated polyurethane foam. An advantage of the use of reticulated polyurethane foam particles is that they enable to achieve a low water uptake not only for higher but especially also for lower foam densities.

US 2003/0170420 discloses a carpet consisting of a primary carpet fabric supported by a rebond polyurethane foam layer. In one particular embodiment, this rebond polyurethane layer is made of reticulated foam particles. In the micrograph of this rebounded reticulated foam shown in Figure 34 of US 2003/0170420, it can be seen that the reticulated foam particles have a very fine cell structure. Such a very fine cell structure is in fact also required to enable the small thicknesses of the bonded foam layers used in carpets and disclosed in this US patent application. Notwithstanding the fact that the bonded foam is made of reticulated foam particles, the bonded foam has still the same drawbacks as the open-celled bonded foams, namely the drawbacks of having a high water uptake and very bad drying capabilities. US 2003/0170420 therefore also discloses to include anti-microbial, anti-fungal and antibacterial agents in the carpet composite and to provide a hot melt layer between the primary carpet fabric and the bonded foam layer which blocks water or liquid passing through the carpet tile.

Reticulated polyurethane foams are usually produced from flexible open-celled foams having a skeletal framework of relatively heavy strands connected by very thin membranes, often called windows, which form the cell walls. In open-celled foams, some of the windows are open or torn in each cell, thus forming an interconnecting network open to fluid flow. Reticulation relates to methods for removing or breaking the cell windows of polyurethane foams. Mechanical, chemical and thermal methods for reticulating foams are known. As one example, foam may be reticulated by destroying substantially all of the windows with a high temperature flame front or explosion, which still leaves the strand network intact. Alternatively, the cell windows may be etched away using the hydrolysing action of water in the presence of an alkali metal hydroxide. Various reticulating methods of polyurethane foams are for example disclosed in US Patent Nos. 3 405 217, 3 423 338, 3 425 890 and 4 670 477.

Compared to conventional open-celled foams, the reticulated foams produced therefrom are generally softer. However, due to the compression of the reticulated foam particles in the bonded foam, they can also provide the hardness required in particular for floor underlay applications. It has now been found that the degree of compression and the amount of binder required to produce the bonded foam can be limited to such an extent that the bonded foam still has a low water uptake. This has been found quite by surprise since due to the skeletal structure of the reticulated foam particles it is not obvious that only a relatively small amount of binder has to be used to achieve the required mechanical properties and moreover since it is known for example from GB 1063 463 that a too strong compression of a reticulated polyurethane foam not only increases the water uptake but even renders it water wicking.

In a preferred embodiment of the method according to the invention, the polyurethane foam particles consist for at least 70 weight %, preferably for at least 80 weight %, more preferably for at least 90 weight % and most preferably for at least 95 weight % of said reticulated polyurethane foam particles.

The more reticulated polyurethane foam particles, the more the density of the bonded foam can be reduced whilst maintaining the required low water uptake. Moreover, the reticulated foam particles do not need to be treated with a water repellent agent so that, if used, the amount thereof can be reduced.

Preferably, the degree of compression of the foam particles is selected in such a manner that the bonded foam has a density lower than 300 kg/m³, preferably lower than 200 kg/m³, more preferably lower than 150 kg/m³ and most preferably lower than 120 kg/m³.

The lower the density, the cheaper the bonded foam. Moreover, especially for lower foam densities a low water uptake could be achieved whilst the bonded reticulated polyurethane foam still provided the required mechanical properties for making it for example suitable as underlay for floors.

The present invention also relates to the bonded foam obtained by the method according to the invention, to the use thereof as underlay for a top floor layer and to a floor construction comprising a top floor layer supported by a bonded foam obtained by the method according to the invention.

Other particularities and advantages of the invention will become apparent from the following description of some particular embodiments of the foam and the method according to the invention. This description is only given by way of example and is not intended to limit the scope of the invention as defined in the appended claims. The reference numerals refer to the single figure illustrating schematically a cross-sectional view through a sport floor which comprises a bonded reticulated foam layer made in accordance with the present invention.

The bonded foam consists of particles bonded to one another by means of a binder. The particles comprise polyurethane foam particles, at least a number of which are particles of at least one reticulated polyurethane foam which has an average cell size of at least 2 mm. This reticulated polyurethane foam is in particular a flexible polyurethane foam which is preferably a polyether foam in view of its more hydrophobic nature than polyester foam. In addition to the polyurethane foam particles, the particles of the bonded foam may comprise other foam particles or also solid particles (filler particles) such as solid plastic, rubber, wood or cork particles. Preferably, the particles used to produce the bonded foam comprise however more than 75 weight %, more preferably more than 85 weight % of polyurethane foam particles.

The bonded foam according to the present invention should have a water uptake, determined at 25°C in accordance with the French standard UEAtc H.1 MOD1, of at most 250 g/m², preferably of at most 200 g/m² and more preferably of at most 150 g/m². Such a low water uptake can be achieved by providing a sufficiently large amount of said relatively coarse celled reticulated polyurethane foam particles in the bonded foam and by limiting the degree of compression of these foam particles in the bonded foam. The polyurethane foam particles in the bonded foam preferably consist for at least 70 weight %, preferably for at least 80 weight %, more preferably for at least 90 weight % and most preferably for at least 95 weight % of said coarse celled reticulated polyurethane foam particles, i.e. of said foam particles which are obtained from at least one reticulated polyurethane foam which has an average cell size of at least 2 mm. In this way, the water uptake of the foam is considerably reduced. Moreover, such an amount of reticulated polyurethane foam particles enable to reduce the density of the bonded foam whilst still maintaining the required reduced water uptake.

In a preferred embodiment, the bonded foam has a density lower than 300 kg/m³, preferably lower than 200 kg/m³, more preferably lower than 150 kg/m³ and most preferably lower than 120 kg/m³. In view of the required mechanical properties, the bonded foam will usually have a density higher than 40 kg/m³, preferably higher than 50 kg/m³ and more preferably higher than 60 kg/m³.

For producing the bonded foam an amount of particles comprising the polyurethane foam particles is provided, a binder is applied for example by spraying onto the particles, the particles are compressed and the binder is allowed to set to bond the particles in their compressed state to one another. When the particles comprise solid particles, it is clear that in the compressed state of the particles not all of the particles are in a compressed state.

As explained hereabove at least a portion of the polyurethane foam particles used to produce the bonded foam comprises reticulated polyurethane foam particles obtained from at least one reticulated polyurethane foam which has an average cell size of at least 2 mm. The polyurethane foam particles, including these coarse celled reticulated polyurethane foam particles and optionally also finer celled reticulated foam particles and/or conventional open celled polyurethane foam particles, are usually produced from waste foam, in particular from trim foam produced as waste when cutting shapes out of larger foam pieces. The waste foam pieces are comminuted to particles of the desired size either by grinding or shredding or by cutting them as disclosed in EP-B-0 679 168. A subsequent sieving step enables to select the desired particle size range. Preferably the reticulated foam particles have such a size that at least 80 vol. %, preferably at least 90 vol. % of them comprise at least 30, preferably at least 40 and more preferably at least 50 complete cells. In this way, the foam properties, in particular the resilient properties are better maintained in the bonded foam.

The coarse celled reticulated foam particles can be produced from one or more reticulated polyurethane foams having average cell sizes which may differ from one another but which are at least equal to 2 mm. Preferably the polyurethane foam particles consist for at least 70 weight %, preferably for at least 80 weight %, more preferably for at least 90 weight % and most preferably for at least 95 weight % of particles of at least one reticulated polyurethane foam which has an average cell size of at least 3 mm, and more preferably of at least one reticulated polyurethane foam which has an average cell size of at least 4 mm. The larger this cell size, the stronger the foam particles may be compressed without increasing the water uptake by capillarity.

For determining the average cell size of a reticulated polyurethane foam, a visual method is used, more particularly the Visiocell method developed by Recticel. This method is based on a microscopic determination of the cell size of a sample of the reticulated polyurethane foam. A foam sample of at least 5 cm x 5cm (thickness corresponds to the rising direction of the foam) is put under the microscope. For coarse cell sizes, the measurement is performed with an enlargement of 10X, for fine cell sizes, the measurement is done with an 60X enlargement. To measure the cell size of the coarse celled reticulated foams used in the method according to the invention, an enlargement of 10X is used. The measurement is performed on a representative cell structure. As a polyurethane foam cell consists of a dodecaeder consisting of 12 pentagons (the windows of the cell, which are open in case of reticulated foam), the measurement is done on a central pentagon surrounded by five other pentagons. The distance is then determined from one rib of such a window to the opposite rib (the rib thickness included). The average cell size is an average of three independent measurements (different pentagons).

In a preferred embodiment, the amount of the coarse celled reticulated polyurethane foam particles and the degree of compression of the polyurethane foam particles are selected in such a manner that the water uptake of the bonded foam is smaller than 200 g/m², and preferably smaller than 150 g/m².

Before applying the binder onto the particles, the polyurethane foam particles have a predetermined apparent density. The apparent density is a measure commonly used to describe the density of loose, uncompressed foam particles (flocks). Since for large amounts of foam particles, the density increases towards the bottom, the apparent density needs to be measured for a small volume. In practice, the apparent density is measured by pouring 10 litres of them (without compression) in a cylindrical recipient, having a diameter of 25 cm. The apparent density of the foam particles is in practice always smaller than the average density of the foam or foams from which they are made.

When the binder is allowed to set, the polyurethane foam particles are preferably compressed to such a degree that they have an average density of at least twice, preferable of at least three times the initial apparent density of those foam particles. When determining the average density of the compressed foam particles, the weight of the binder may not be included in the weight of the foam particles so that the degree of compression corresponds to the ratio between the average density and the apparent density. The higher this compression degree, the better the mechanical properties of the bonded foam, more particularly the higher its hardness. The polyurethane foam particles are compressed to such a degree that the bonded foam has a pressure deformation modulus (DVM: DruckVerformungsModul) greater than 0.015 N/mm², preferably greater than 0.020 N/mm² and more preferably greater than 0.030 N/mm², measured according to the DVM test method of the German Institute für Sportbodentechnik (dated November 26, 2002). To determine the DVM according to the referred method, a foam sample is first precompressed to 40 % of its original thickness during 1 minute. After decompression, the sample is compressed to a 20% deformation at a compression speed of 2 x sample thickness (mm) per minute, and the force is measured at this 20 % deformation. The DVM is then calculated by dividing said force by the surface area of the sample (mm²) and multiplying this result by 5 (=1/0.2).

Since the water uptake of the bonded foam may increase by capillary effects when the reticulated foam particles are compressed too strongly (depending on the cell size of the reticulated foam), the polyurethane foam particles are preferably compressed to such a degree that they have, in their compressed state, an average density which comprises at the most ten times, preferably at the most eight times and more preferably at the most six times the apparent density of those foam particles.

The binder used to bond the particles to one another is preferably a non foam-forming binder, i.e. a binder which has, after setting, a density higher than 300 kg/m³ and preferably higher than 500 kg/m³. The binder is for example an elastomeric rubber-based binder or a polyurethane glue, in particular a polyurethane prepolymer having free NCO groups which can be cured in the presence of moisture, in particular in the presence of steam which is blown through the foam particles to cure the glue. Usually such prepolymers have a free NCO content of 5 to 25 %, and more particularly between 5 and 15 %. The polyurethane prepolymer is preferably a prepolymer made with TDI and/or MDI and conventional polyether polyols used for the production of soft polyurethane foams.

It has been found that, notwithstanding the skeletal structure of the reticulated foam particles, only a relatively small amount of binder is required to bond the reticulated foam particles to one another, more particularly an amount of binder which has only a minor effect on the density of the bonded foam and thus on any capillary water uptake of the foam. In a preferred embodiment, the binder is applied on the particles used to produce the bonded foam in an amount comprising between 3 and 20 %, preferably between 5 and 15 %, of the weight of those particles.

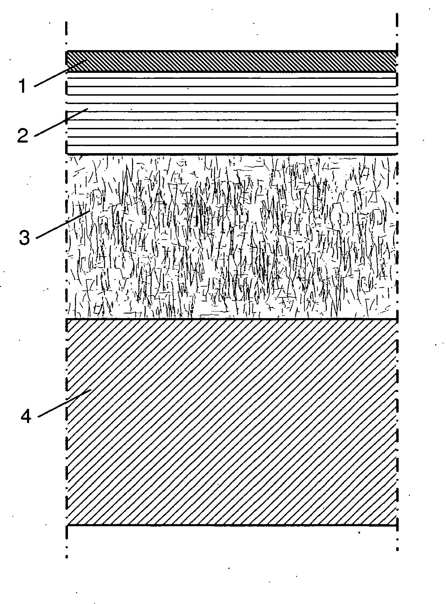

The invention as described hereabove enables to produce a bonded foam which is particularly suited as underlay for floors, in particular as underlay for sport floors. Figure 1 illustrates a possible floor construction according to the invention, comprising a first top floor layer 1 consisting for example of linoleum or of polyurethane, a second top floor layer 2 which consists of a rigid pressure distribution layer, for example a layer of wooden multiply plates, a layer 3 of the bonded foam according to the present invention and a base layer 4 consisting for example of a screed layer. It is clear that additional layers can be provided, for example one or more softer layers between the first top floor layer 1 and the pressure distribution layer 2.

The bonded foam layer 3 has preferably a thickness of at least 10 mm, more preferably of at least 20 mm and most preferably of at least 30 mm. Its thickness is usually smaller than 50 mm and more particularly smaller or equal to 40 mm. Such thicknesses enable to achieve the elastic properties required for different types of sport floors. The bonded foam layer 3 is preferably made of sheets (plates) which are cut from a larger block of the bonded reticulated foam according to the invention. When cutting these plates it has been found that, notwithstanding the coarse celled nature of the bonded foam and the relatively small amount of binder used to produce the bonded foam, the bonded foam could be processed quite well.

The pressure distribution layer 2 applied on top of the bonded foam layer should be sufficiently stiff, and should in particular show a bending stiffness, measured according to DIN 68705-3, higher than 15 N/mm², preferably higher than 30 N/mm². In practice, the top floor layers are relatively heavy so that the bonded foam layer 3, which is quite thick, has to provide a sufficiently strong support while remaining elastic and having a low water uptake.

Due to the coarse reticulated cell structure, the water uptake by capillary absorption is sufficiently small (even without use of a water repellent agent) and, when the floor has become wet for example by having spilled water or another liquid onto the floor, the spilled water can flow quite easily through the bonded foam layer enabling thus a much quicker drying of the upper floor layers. In practice a closed cell polyethylene foam is often used as underlay in sport floors (see for example the Infothek 2004 documentation of Polysport & Elaku Sportbaustoffe GmbH). Compared to this polyethylene foam, the bonded reticulated polyurethane foam has the advantage that its recovery after creep, measured in accordance with the French standard NF P-75 301 is much better and that its height and hardness losses after dynamic fatigue (70 000 impacts with load of 750 N measured in accordance with EN/ISO 3385) are much smaller. Moreover, due to its closed cell nature the polyethylene foam does not allow a drainage of liquid from the top floor layers to the base layer. An additional advantage of the bonded reticulated foam of the present invention is that it can be produced from waste material.

### EXAMPLE

Reticulated polyurethane foam particles (flocks) were made by shredding a mixture of skin free reticulated polyurethane foam pieces so that foam particles with a size of up to 30 mm were obtained. The reticulated polyurethane foam pieces consisted mainly of a flexible polyether foam having an average cell size of about 4 mm and a density of about 31 kg/m³. A small amount of reticulated polyurethane foam pieces, having an average cell size of between 1 and 2 mm, was however also present in the mixture of foam pieces. The shredded foam particles comprised between about 30 and 200 complete cells. A sample of 60 x 60 x 30 mm of the original reticulated polyurethane foam (cell size of about 4 mm) was tested in accordance with the DVM test method of the German Institute für Sportbodentechnik (IST), which gave a pressure deformation modulus (DVM value) of about 0.022 N/mm².

The shredded foam particles had an apparent density of about 25 kg/m³. Per kilogram of these foam particles 100 grams of a binder consisting of a polyurethane prepolymer based on a mixture of 2,4- and 2,6-toluene diisocyanate and a polyether polyol was sprayed onto the foam particles while stirring them.

After some additional mixing, the mixture was poured into a mould and the top lid of the mould was closed to compress the foam particles to an average density of about 73 kg/m³, i.e. the foam particles were compressed to about one third of their volume. The reaction of the binder was then obtained by pressing superheated steam through the perforated bottom of the mould for about 8 minutes. The bonded foam was removed from the mould and was allowed to dry and postcure for 24 hours. Out of the produced foam block sheets were cut having a thickness of about 2 cm. The bonded foam had a density of about 80 kg/m³.

### Preparation of wet samples

To prepare a wet bonded foam sample, the foam sample was squeezed under water and was allowed to drip dry for one hour. The weight gain of the samples (100x100x20 mm) was on average about 100 %.

### Hardness

The CLD40 hardness (Compression Load Deflection at 40% compression) of the bonded foam was measured in accordance with ISO 3386-1 for dry and wet samples of 100x100x50 mm. The dry samples had a CLD40 value of about 8.4 kPa whilst the wet samples had a CLD value of about 6.4 kPa. The wet foams were thus about 25% softer.

The DVM modulus (DruckVerformungsModul) was measured for dry and wet samples of 60x60x30 mm. The dry samples had a DVM modulus of about 0.067 N/mm² whilst the wet samples had a DVM modulus of about 0.043 N/mm². The closed cell polyethylene foams which are currently used as underlay for sport floors have a DVM modulus of about 0.072 N/mm². The bonded foam prepared in this example is thus perfectly suitable to replace this material.

### Recovery after creep

The creep was determined in accordance with NF P-75 301 on a sample of 200x200x20 mm. The results are given in the following table.

**Table 1: Creep of the bonded reticulated foam during 4 days under increasing pressure.**

| Time (hours) | Pressure (MPa) | Indentation (mm) |
|---|---|---|
| 24 | 0.01 | 5.1 |
| 24 | 0.02 | 9.6 |
| 24 | 0.03 | 12.1 |
| 24 | 0.04 | 13.2 |
| 1 | 0.001 | 4.6 |

### Elasticity

The elasticity or ball rebound was determined in accordance with ASTM D3574 for dry and wet samples of 100x100 x50 mm. The elasticity of the dry sample comprised 33 % whilst the elasticity of the wet sample comprised 30 %. The presence of water in the bonded reticulated foam has thus only a minor effect on the elasticity.

### Dynamic fatigue

The dynamic fatigue was determined in accordance with EN/ISO 3385. on samples of 200x200x20 mm. After 70 000 impacts with a load of 750 N, the height of the sample was reduced with only 10% (for the closed cell polyethylene foam the height was reduced with 32%) and the force required for a 40% compression of the sample was even increased with 18 % (for the closed cell polyethylene foam this force was reduced with 86%).

### Water uptake

The water uptake was measured at 25°C in accordance with UEAtc H.1 MOD1 for two samples of 150 x 150 x 20 mm (the test was performed as described in WO 01/00718). The maximum water uptake of both samples was 106 g/m² or 5.1 weight %. The maximum water uptake of two samples of the original reticulated polyurethane foam (prime foam) was 50.2 g/m² or 11.0 weight %.

### Drying capacity

A wet sample of 100x100x20mm was allowed to dry for four days at 23°C, 50% relative humidity. After those four days the sample had its original dry weight.

## Claims

1. A method for producing a bonded foam comprising the steps of:
- providing an amount of particles which comprise polyurethane foam particles;
- applying a binder onto said particles;
- compressing the particles having the binder applied thereon to such a degree that the bonded foam has a pressure deformation modulus (DVM: DruckVerformungsModul) greater than 0.015 N/mm², preferably greater than 0.020. N/mm²; and
- allowing the binder to set to bond the particles in their compressed state to one another,
**characterised in that**
said polyurethane foam particles comprise an amount of particles of at least one reticulated polyurethane foam which has an average cell size of at least 2 mm, said amount of reticulated polyurethane foam particles and said degree of compression being selected in such a manner that the bonded foam has a water uptake, determined at 25°C in accordance with the French standard UEAtc H.1 MOD1, of maximum 250 g/m².

2. A method according to claim 1, **characterised in that** said polyurethane foam particles consist for at least 70 weight %, preferably for at least 80 weight %, more preferably for at least 90 weight % and most preferably for at least 95 weight % of said reticulated polyurethane foam particles.

3. A method according to claim 1 or 2, **characterised in that** said polyurethane foam particles consist for at least 70 weight %, preferably for at least 80 weight %, more preferably for at least 90 weight % and most preferably for at least 95 weight % of particles of at least one reticulated polyurethane foam which has an average cell size of at least 3 mm, and preferably of at least one reticulated polyurethane foam which has an average cell size of at least 4 mm.

4. A method according to any one of the claims 1 to 3, **characterised in that** said particles consist for at least 75 weight %, preferably for at least 85 weight %, of said polyurethane foam particles.

5. A method according to any one of the claims 1 to 4, **characterised in that** said degree of compression is selected in such a manner that the bonded foam has a density lower than 300 kg/m³, preferably lower than 200 kg/m³, more preferably lower than 150 kg/m³ and most preferably lower than 120 kg/m³.

6. A method according to any one of the claims 1 to 5, **characterised in that** said amount of reticulated polyurethane foam particles, which are obtained from at least one reticulated polyurethane foam which has an average cell size of at least 2 mm, and said degree of compression is selected in such a manner that the bonded foam has a water uptake, determined at 25°C in accordance with the French standard UEAtc H.1 MOD1, of maximum 200 g/m² and preferably of maximum 150 g/m².

7. A method according to any one of the claims 1 to 6, **characterised in that** at least 80 vol. %, preferably at least 90 vol. %, of said reticulated polyurethane foam particles, which are obtained from at least one reticulated polyurethane foam which has an average cell size of at least 2 mm, comprise at least 30, preferably at least 40 and more preferably at least 50 complete cells.

8. A method according to any one of the claims 1 to 7, **characterised in that** said bonded foam is produced in the form of at least one block, which block is subsequently cut into sheets having a thickness greater than 10 mm, preferably greater than 20 mm and more preferably greater than 30 mm.

9. A method according to any one of the claims 1 to 8, **characterised in that** the polyurethane foam particles used to provide said amount of particles have a predetermined apparent density and said degree of compression is selected so that they have, in said compressed state, an average density which comprises between two and ten times said apparent density.

10. A method according to claim 9, **characterised in that** said degree of compression is selected so that the polyurethane foam particles have, in said compressed state, an average density which comprises at least three times said apparent density.

11. A method according to claim 9 or 10, **characterised in that** said degree of compression is selected so that the polyurethane foam particles have, in said compressed state, an average density which comprises at the most eight, preferably at the most six times said apparent density.

12. A method according to any one of the claims 1 to 11, **characterised in that** said binder is applied in an amount comprising between 3 and 20 %, preferably between 5 and 15 %, of the weight of said amount of particles.

13. A method according to any one of the claims 1 to 12, **characterised in that** said binder is a non foam-forming binder having after setting a density higher than 300 kg/m³ and preferably higher than 500 kg/m³.

14. A method according to any one of the claims 1 to 13, **characterised in that** said degree of compression is selected so that the bonded foam has a pressure deformation modulus (DVM: DruckVerformungsModul), measured in accordance with the DVM test method of the German Institute für Sportbodentechnik dated November 26, 2002, greater than 0.030 N/mm².

15. A bonded foam obtained by a method according to any one of the claims 1 to 14.

16. Use of a bonded foam obtained by a method according to any one of the claims 1 to 14 as underlay for a top floor layer, in particular for a rigid top floor layer.

17. A floor construction comprising a top floor layer supported by a layer of a bonded foam obtained by a method according to any one of the claims 1 to 14.

18. A floor construction according to claim 17, **characterised in that** said top floor layer is a rigid top floor layer having a bending stiffness, measured according to DIN 68705-3, higher than 15 N/mm², and preferably higher than 30 N/mm².

19. A floor construction according to claim 17 or 18, **characterised in that** said bonded foam layer has a thickness larger than 10 mm, preferably larger than 20 mm and more preferably larger than 30 mm.

## Patentansprüche

1. Ein Verfahren zur Herstellung eines gebundenen Schaums, welches folgende Schritte umfasst:
- Bereitstellen einer Menge von Partikeln, welche Polyurethanschaumpartikel umfassen;
- Aufbringen eines Bindemittels auf die erwähnten Partikel;
- Komprimieren der Partikel, auf die Bindemittel in einem solchen Ausmaß aufgetragen ist, dass der gebundene Schaum ein Druckverformungsmodul (DVM) von über 0,015 N/mm², vorzugsweise über 0,020 N/mm² hat; und
- Aushärten Lassen des Bindemittels, um die Partikel in ihrem komprimierten Zustand aneinander zu binden,
**dadurch gekennzeichnet, dass**
die erwähnten Polyurethanschaumpartikel eine Menge von Partikeln von zumindest einem retikulierten Polyurethanschaum enthalten, welcher eine durchschnittliche Zellgröße von mindestens 2 mm hat, wobei die erwähnte Menge von retikulierten Polyurethanschaumpartikeln und das erwähnte Ausmaß der Kompression so ausgewählt sind, dass der gebundene Schaum eine Wasseraufnahme, bestimmt bei 25 °C nach der französischen Norm UEAtc H.1 MOD1, von höchstens 250 g/m² hat.

2. Ein Verfahren nach Anspruch 1, **dadurch gekennzeichnet, dass** die erwähnten Polyurethanschaumpartikel zu mindestens 70 Gew.%, vorzugsweise zu mindestens 80 Gew.%, besser zu mindestens 90 Gew.% und am besten zu mindestens 95 Gew.% aus den erwähnten retikulierten Polyurethanschaumpartikeln bestehen.

3. Ein Verfahren nach Anspruch 1 oder 2, **dadurch gekennzeichnet, dass** die erwähnten Polyurethanschaumpartikel zu mindestens 70 Gew.%, vorzugsweise zu mindestens 80 Gew.%, besser zu mindestens 90 Gew.% und am besten zu mindestens 95 Gew.% aus Partikeln von zumindest einem retikulierten Polyurethanschaum bestehen, welcher eine durchschnittliche Zellgröße von mindestens 3 mm hat, und vorzugsweise aus zumindest einem retikulierten Polyurethanschaum, welcher eine durchschnittliche Zellgröße von mindestens 4 mm hat.

4. Ein Verfahren nach irgendeinem der Ansprüche 1 bis 3, **dadurch gekennzeichnet, dass** die erwähnten Partikel zu mindestens 75 Gew.%, vorzugsweise zu mindestens 85 Gew.%, aus den erwähnten Polyurethanschaumpartikeln bestehen.

5. Ein Verfahren nach irgendeinem der Ansprüche 1 bis 4, **dadurch gekennzeichnet, dass** das erwähnte Ausmaß der Kompression so ausgewählt ist, dass der gebundene Schaum eine Dichte von weniger als 300 kg/m³, vorzugsweise weniger als 200 kg/m³, besser weniger als 150 kg/m³ und am besten von weniger als 120 kg/m³ hat.

6. Ein Verfahren nach irgendeinem der Ansprüche 1 bis 5, **dadurch gekennzeichnet, dass** die erwähnte Menge von retikulierten Polyurethanschaumpartikeln, welche von zumindest einem retikulierten Polyurethanschaum erhalten werden, der eine durchschnittliche Zellgröße von mindestens 2 mm hat, und das erwähnte Ausmaß der Kompression so ausgewählt sind, dass der gebundene Schaum eine Wasseraufnahme, bestimmt bei 25 °C nach der französischen Norm UEAtc H.1 MOD1, von höchstens 200 g/m² und vorzugsweise höchstens 150 g/m² hat.

7. Ein Verfahren nach irgendeinem der Ansprüche 1 bis 6, **dadurch gekennzeichnet, dass** mindestens 80 Gew.%, vorzugsweise mindestens 90 Gew.%, der erwähnten retikulierten Polyurethanschaumpartikel, welche von zumindest einem retikulierten Polyurethanschaum erhalten werden, der eine durchschnittliche Zellgröße von mindestens 2 mm hat, mindestens 30, vorzugsweise mindestens 40 und besser noch mindestens 50 komplette Zellen umfassen.

8. Ein Verfahren nach irgendeinem der Ansprüche 1 bis 7, **dadurch gekennzeichnet, dass** der erwähnte gebundene Schaum in Form von zumindest einem Block hergestellt wird, wobei dieser Block nachfolgend in Platten geschnitten wird, die eine Dicke von mehr als 10 mm, vorzugsweise mehr als 20 mm und besser noch von mehr als 30 mm haben.

9. Ein Verfahren nach irgendeinem der Ansprüche 1 bis 8, **dadurch gekennzeichnet, dass** die Polyurethanschaumpartikel, die zur Bereitstellung der erwähnten Menge von Partikeln verwendet werden, eine vorbestimmte Rohdichte haben, und dass das erwähnte Ausmaß der Kompression so ausgewählt ist, dass sie, im erwähnten komprimierten Zustand, eine durchschnittliche Dichte von zwischen zwei und zehn Mal die erwähnte Rohdichte haben.

10. Ein Verfahren nach Anspruch 9, **dadurch gekennzeichnet, dass** das erwähnte Ausmaß der Kompression so ausgewählt ist, dass die Polyurethanschaumpartikel, im erwähnten komprimierten Zustand, eine durchschnittliche Dichte von mindestens drei Mal die erwähnte Rohdichte haben.

11. Ein Verfahren nach Anspruch 9 oder 10, **dadurch gekennzeichnet, dass** das erwähnte Ausmaß der Kompression so ausgewählt ist, dass die Polyurethanschaumpartikel, im erwähnten komprimierten Zustand, eine durchschnittliche Dichte von höchstens acht, vorzugsweise höchstens sechs Mal die erwähnte Rohdichte haben.

12. Ein Verfahren nach irgendeinem der Ansprüche 1 bis 11, **dadurch gekennzeichnet, dass** das erwähnte Bindemittel in einer Menge von zwischen 3 und 20 %, vorzugsweise zwischen 5 und 15 %, des Gewichts der erwähnten Partikelmenge aufgebracht wird.

13. Ein Verfahren nach irgendeinem der Ansprüche 1 bis 12, **dadurch gekennzeichnet, dass** das erwähnte Bindemittel ein nicht Schaum bildendes Bindemittel ist, das nach dem Aushärten eine Dichte von mehr als 300 kg/m³ und vorzugsweise mehr als 500 kg/m³ hat.

14. Ein Verfahren nach irgendeinem der Ansprüche 1 bis 13, **dadurch gekennzeichnet, dass** das erwähnte Ausmaß der Kompression so ausgewählt ist, dass der gebundene Schaum ein Druckverformungsmodul (DVM), gemessen nach dem DVM-Testverfahren des deutschen Instituts für Sportbodentechnik vom 26. November 2002, von mehr als 0,030 N/mm² hat.

15. Ein gebundener Schaum, erhalten durch ein Verfahren nach irgendeinem der Ansprüche 1 bis 14.

16. Verwendung eines durch ein Verfahren nach irgendeinem der Ansprüche 1 bis 14 erhaltenen gebundenen Schaums als Unterlage für einen Oberboden, insbesondere für einen harten Bodenbelag.

17. Ein Bodenaufbau mit einem Oberboden, der durch eine Schicht aus einem gebundenen Schaum unterstützt wird, welcher durch ein Verfahren nach irgendeinem der Ansprüche 1 bis 14 erhalten wurde.

18. Ein Bodenaufbau nach Anspruch 17, **dadurch gekennzeichnet, dass** der erwähnte Oberboden ein harter Bodenbelag ist, der eine Biegesteifigkeit, gemessen nach DIN 68705-3, von mehr als 15 N/mm² und vorzugsweise mehr als 30 N/mm² hat.

19. Ein Bodenaufbau nach Anspruch 17 oder 18, **dadurch gekennzeichnet, dass** die erwähnte gebundene Schaumschicht eine Dicke von mehr als 10 mm, vorzugweise mehr als 20 mm und besser noch von mehr als 30 mm hat.

## Revendications

1. Procédé de production d'une mousse liée comprenant les étapes consistant à :
- prévoir une quantité de particules qui comprennent des particules de mousse de polyuréthanne,
- appliquer un liant sur lesdites particules,
- comprimer les particules sur lesquelles le liant a été appliqué à un degré tel que la mousse liée a un module de déformation sous compression (DVM : DruckVerformungsModul) supérieur à 0,015 N / mm², de préférence supérieur à 0,020 N / mm², et
- permettre au liant de prendre pour lier les particules dans leur état comprimé les unes aux autres,
**caractérisé en ce que**
lesdites particules de mousse de polyuréthanne comprennent une quantité de particules d'au moins une mousse de polyuréthanne réticulée qui a une taille de cellule moyenne d'au moins 2 mm, ladite quantité de particules de mousse de polyuréthanne réticulée et ledit degré de compression étant choisis de telle manière que la mousse liée ait une absorption d'eau, déterminée à 25° conformément à la norme française UEAtc H.1 MOD1, d'au maximum 250 g / m².

2. Procédé selon la revendication 1, **caractérisé en ce que** lesdites particules de mousse de polyuréthanne consistent pour au moins 70 % en poids, de préférence pour au moins 80 % en poids, mieux encore pour au moins 90 % en poids et idéalement pour au moins 95 % en poids en lesdites particules de mousse de polyuréthanne réticulée.

3. Procédé selon la revendication 1 ou 2, **caractérisé en ce que** lesdites particules de mousse de polyuréthanne consistent pour au moins 70 % en poids, de préférence pour au moins 80 % en poids, mieux encore pour au moins 90 % en poids et idéalement pour au moins 95 % en poids de particules d'au moins une mousse de polyuréthanne réticulée qui a une taille de cellule moyenne d'au moins 3 mm, et de préférence d'au moins une mousse de polyuréthane réticulée qui a une taille de cellule moyenne d'au moins 4 mm.

4. Procédé selon l'une quelconque des revendications 1 à 3, **caractérisé en ce que** lesdites particules consistent pour au moins 75 % en poids, de préférence pour au moins 85 % en poids, en lesdites particules de mousse de polyuréthanne.

5. Procédé selon l'une quelconque des revendications 1 à 4, **caractérisé en ce que** ledit degré de compression est choisi de telle manière que la mousse liée a une masse volumique inférieure à 300 kg / m³, de préférence inférieure à 200 kg / m³ et idéalement inférieure à 120 kg /m³.

6. Procédé selon l'une quelconque des revendications 1 à 5, **caractérisé en ce que** ladite quantité de particules de mousse de polyuréthanne réticulée, qui sont obtenues à partir d'au moins une mousse de polyuréthanne réticulée qui a une taille de cellule moyenne d'au moins 2 mm, et ledit degré de compression est choisi de telle manière que la mousse liée ait une absorption d'eau, déterminée à 25° conformément à la norme française UEAtc H.1 MOD1, d'au maximum 200 g / m² et de préférence d'au maximum 150 g / m².

7. Procédé selon l'une quelconque des revendications 1 à 6, **caractérisé en ce qu'**au moins 80 % en volume, de préférence au moins 90 % en volume, desdites particules de mousse de polyuréthanne réticulée, qui sont obtenues à partir d'au moins une mousse de polyruréthanne réticulée qui a une taille de cellule moyenne d'au moins 2 mm, comprennent au moins 30, de préférence au moins 40 et mieux encore au moins 50 cellules complètes.

8. Procédé selon l'une quelconque des revendications 1 à 7, **caractérisé en ce que** ladite mousse liée est produite sous la forme d'au moins un bloc, lequel bloc est ensuite découpé en feuilles ayant une épaisseur supérieure à 10 mm, de préférence supérieure à 20 mm et mieux encore supérieure à 30 mm.

9. Procédé selon l'une quelconque des revendications 1 à 8, **caractérisé en ce que** les particules de mousse de polyuréthanne utilisées pour fournir ladite quantité de particules ont une masse volumique apparente prédéterminée et ledit degré de compression est choisi afin qu'elles aient, dans ledit état comprimé, une masse volumique moyenne qui comprend entre deux et dix fois ladite masse volumique apparente.

10. Procédé selon la revendication 9, **caractérisé en ce que** ledit degré de compression est choisi afin que les particules de mousse de polyuréthanne aient, dans ledit état comprimé, une masse volumique moyenne qui comprend au moins trois fois ladite masse volumique apparente.

11. Procédé selon la revendication 9 ou 10, **caractérisé en ce que** ledit degré de compression est choisi afin que les particules de mousse de polyuréthanne aient, dans ledit état comprimé, une masse volumique moyenne qui comprend au maximum huit, de préférence au maximum six fois ladite masse volumique apparente.

12. Procédé selon l'une quelconque des revendications 1 à 11, **caractérisé en ce que** ledit liant est appliqué en une quantité comprenant entre 3 et 20 %, de préférence entre 5 et 15 %, du poids de ladite quantité de particules.

13. Procédé selon l'une quelconque des revendications 1 à 12, **caractérisé en ce que** ledit liant est un liant ne formant pas mousse qui a, après prise, une masse volumique supérieure à 300 kg / m³ et de préférence supérieure à 500 kg / m³.

14. Procédé selon l'une quelconque des revendications 1 à 13, **caractérisé en ce que** ledit degré de compression est choisi afin que la mousse liée ait un module de déformation sous compression (DVM : DruckVerformungsModul), mesuré selon la méthode d'essai DVM de l'Institut allemand für Sportbodentechnik datée du 26 novembre 2002, supérieur à 0,030 N / mm².

15. Mousse liée obtenue par un procédé selon l'une quelconque des revendications 1 à 14.

16. Utilisation d'une mousse liée obtenue par un procédé selon l'une quelconque des revendications 1 à 14 comme sous-couche pour une couche supérieure de plancher, en particulier une couche supérieure rigide de plancher.

17. Construction de plancher comprenant une couche supérieure de plancher supportée par une couche de mousse liée obtenue par un procédé selon l'une quelconque des revendications 1 à 14.

18. Construction de plancher selon la revendication 17, **caractérisée en ce que** ladite couche supérieure rigide de plancher a une rigidité de flexion, mesurée selon la norme DIN 38705-3, supérieure à 15 n / mm², et de préférence supérieure à 30 N / mm².

19. Construction de plancher selon la revendication 17 ou 18, **caractérisée en ce que** ladite couche de mousse liée a une épaisseur supérieure à 10 mm, de préférence supérieure à 20 mm et mieux encore supérieure 30 mm.
